**Europäisches Patentamt**

**European Patent Office**

**Office européen des brevets**

(19)

(11) Veröffentlichungsnummer: **0 194 473**
**B1**

(12) # EUROPÄISCHE PATENTSCHRIFT

(45) Veröffentlichungstag der Patentschrift:
02.08.89

(21) Anmeldenummer: **86102054.3**

(22) Anmeldetag: **18.02.86**

(51) Int. Cl.⁴: **G 01 L 3/24,** G 01 L 5/00,
A 61 B 5/22

(54) Vorrichtung zum Messen eines Energieaufwands.

(30) Priorität: **23.02.85 DE 8505266 U**

(43) Veröffentlichungstag der Anmeldung:
**17.09.86 Patentblatt 86/38**

(45) Bekanntmachung des Hinweises auf die Patenterteilung:
**02.08.89 Patentblatt 89/31**

(84) Benannte Vertragsstaaten:
**AT BE CH DE FR GB IT LI LU NL SE**

(56) Entgegenhaltungen:
**DE-U-8 203 421**

(73) Patentinhaber: **Kiffe, Horst- Gregor, Dipl.- Ing.,
Vogelbeerweg 19, D-7730 Villingen- Schwenningen
(DE)**

(72) Erfinder: **Kiffe, Horst- Georg, Dipl.- Ing.,
Vogelbeerweg 19, D-7730 Villingen- Schwenningen
(DE)**
Erfinder: **Müller, Hubert, Professor Dr.,
Krummackerstrasse 34, D-7833 Endingen (DE)**

(74) Vertreter: **Patentanwälte Dipl.- Ing. Klaus
Westphal Dr. rer. nat. Bernd Mussgnug Dr.
rer.nat. Otto Buchner, Waldstrasse 33, D-7730 VS-
Villingen (DE)**

EP 0 194 473 B1

## Beschreibung

Die Erfindung betrifft eine Vorrichtung nach dem Oberbegriff des Anspruchs 1.

Die gesamte Vorrichtung läßt sich vorzugsweise in ein das Pedal eines Fahrrads oder eines Ergometers umgebendes Gehäuse einbauen.

Eine derartige Vorrichtung ist in dem DE-GM-8 203 421 beschrieben. Dabei ist als Stellglied eine Blattfeder verwendet, an der eine Zahnstange als Übertragungsglied fest angebracht ist. Die Zahnstange steht mit einem Zahnrad im Eingriff, das eine Schaltklinke eines Freilaufs trägt. Die Antriebswelle des Zahnrads steht mit einem mechanischen Zählwerk als Anzeigeeinrichtung in Verbindung.

Diese Vorrichtung nach dem Stand der Technik ist jedoch aus verhältnismäßig komplizierten Teilen zusammengesetzt, deren Herstellung einen erheblichen Aufwand bedingt.

Der Erfindung liegt daher die Aufgabe zugrunde, eine Vorrichtung zum Messen eines Energieaufwands der eingangs genannten Art zu schaffen, die aus einfach und billig herzustellenden Teilen zusammengebaut ist.

Diese Aufgabe wird bei einer Vorrichtung der eingangs genannten Art durch die kennzeichnenden Merkmale des Anspruchs 1 gelöst.

Durch diese Maßnahme wird ein Aufbau der Vorrichtung aus einfach und billig in Massenfertigung herzustellenden Einzelteilen möglich.

Bei einer bevorzugten Ausführungsform der Erfindung ist der Umfang des Reibrads mit einer in Axialrichtung verlaufenden Riffelung versehen, und das Reiborgan ist eine mit einem gezinkten Abschlußrand versehene Schaltfeder, wobei der gezinkte Abschlußrand dergestalt ausgerichtet ist, daß die Mitnehmerwirkung auf das Reibrad in Betätigungsrichtung stärker ist als in Rückzugsrichtung.

In vorteilhafter Weiterbildung der Erfindung ist die Sperrfeder in gleicher Weise ausgebildet wie die Schaltfeder, wobei jedoch die Ausrichtung der Sperrfeder derart gewählt ist, daß deren Bremswirkung in Rückzugsrichtung der Schaltfeder größer ist als in der Betätigungsrichtung.

Auf diese Weise ergibt sich die Möglichkeit für die Schaltfeder und die Sperrfeder identische Fertigungsteile zu verwenden, wodurch eine Massenfertigung noch weiter vereinfacht wird.

In zweckmäßiger Ausgestaltung der Erfindung ist die Schaltfeder unmittelbar mit dem Betätigungsglied verbunden, wobei das Betätigungsglied durch eine Platte gebildet ist, deren der Befestigungsseite der Schaltfeder entgegengesetztes Ende in Betätigungsrichtung der Schaltfeder schwenkbar gelagert ist.

Eine weitere vorteilhafte Ausführungsform der Erfindung zeichnet sich dadurch aus, daß die Schaltfeder mit einem abgewinkelten Teil parallel zum Betätigungsglied verläuft und am Ende des abgewinkelten Teils schwenkbar gelagert ist, wobei das eigentliche Betätigungsglied starr befestigt ist und einen elastischen Mittelteil aufweist, der aufgrund einer Energieeinwirkung den abgewinkelten Teil der Schaltfeder beaufschlagt und gegen die Kraft der Tellerfeder in Betätigungsrichtung drückt.

Anhand der Figuren werden Ausführungsbeispiele der Erfindung näher erläutert. Es zeigt:

Fig. 1   eine schematische Darstellung der Funktionsweise der Vorrichtung gemäß der Erfindung,

Fig. 2   einen vereinfachten Schnitt durch die mit einem Gehäuse an einem Fahrradpedal befestigte Vorrichtung gemäß der Erfindung,

Fig. 3   einen vereinfachten Schnitt ähnlich wie in Fig. 2, jedoch unter Verwendung einer anderen Ausführungsform der Erfindung.

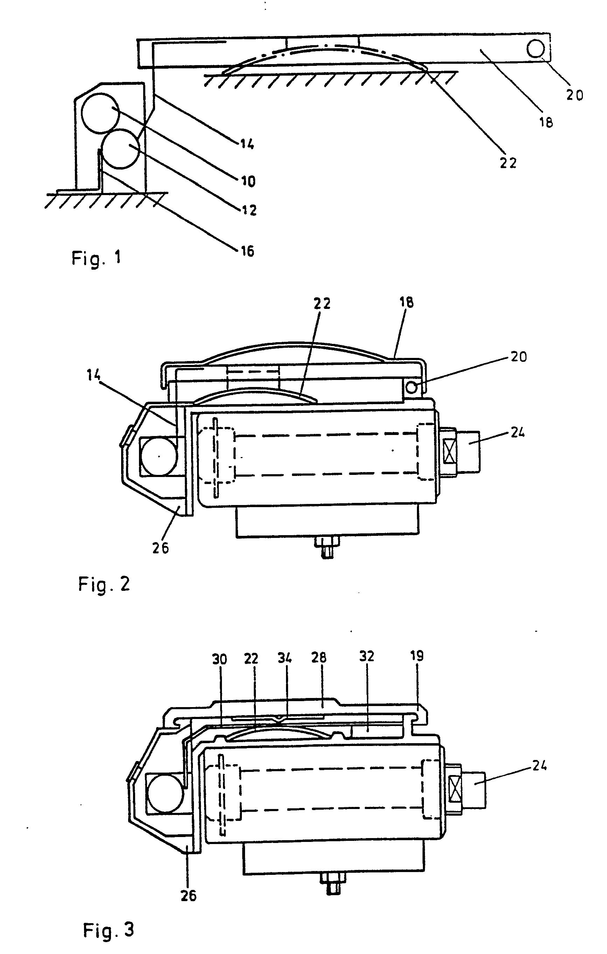

Wie aus Fig. 1 ersichtlich, wird ein mechanischer Zähler 10 in an sich bekannter Weise durch ein Antriebsrand angetrieben, das im vorliegenden Fall als Reibrad 12 ausgebildet ist. Der Umfang des Reibrads 12 ist in Axialrichtung desselben mit einer Riffelung versehen. Eine Schaltfeder 14 liegt mit einer gezinkten Abschlußkante dergestalt gegen die Riffelung des Reibrads 12 an, daß bei der Abwärtsbewegung der Schaltfeder 14 dem Reibrad 12 eine entsprechende Drehung aufgezwungen wird, wogegen bei der Aufwärtsbewegung der Schaltfeder 14 deren gezinkte Abschlußkante entlang der Riffelung gleiten kann, ohne das Reibrad 12 mitzunehmen, sofern dieses eine entsprechende Abbremsung erfährt. Diese Abbremsung erfolgt durch eine Sperrfeder 16, die in ähnlicher Weise gegen das Reibrad 12 anliegt wie die Schaltfeder 14, jedoch in umgekehrter Richtung, so daß die Abschlußkante der Sperrfeder 16 bei Abwärtsbewegung der Schaltfeder 14 über die Riffelung des Reibrads 12 hinweggleiten kann, jedoch bei der Rückzugsbewegung der Schaltfeder 14 die Rückwärtsdrehung des Reibrads 12 sperrt.

Bei einer bevorzugten Ausführungsform der Erfindung ist die Schaltfeder 14 mit dem Deckel 18 eines Gehäuses fest verbunden. Der Deckel 18 ist auf seiner der Befestigungsseite der Schaltfeder 14 entgegengesetzten Seite mit einem Scharnier 20 in Betätigungsrichtung der Schaltfeder 14 schwenkbar gelagert. Der Deckel 20 ist Bestandteil eines Gehäuses, in welches die gesamte Vorrichtung zur Messung des Energieaufwands eingebaut ist und mit dessen Hilfe die Vorrichtung zum Messen des Energieaufwands z. B. am Pedal einem Fahrrads oder eines Ergometers befestigt ist, wie dies bei den in Fig. 2 und Fig. 3 dargestellten Ausführungsformen der Erfindung dargestellt ist. Auf den Deckel wirkt unmittelbar die zu messende Energie, die z. b. vom Fuß eines Radfahrers aufgewandt wird. Der durch die Energieeinwirkung bedingten Auslenkung des im vorliegenden Fall durch den Deckel 18 gebildeten Betätigungsglieds wirkt eine unterhalb des Betätigungsglieds angeordnete Tellerfeder 22 entgegen. Die gegen diese Federkraft erzielte Auslenkung des Betätigungsglieds wird durch die Schaltfeder 14 auf das Reibrad 12 und damit auf den Zähler 10 übertragen, dessen Anzeige vorzugsweise direkt in Energieeinheiten geeicht ist.

In Fig. 2 ist die beschriebene Ausführungsform der Erfindung im Zusammenhang mit einem Fahrradpedal 24 dargestellt, welches von dem Gehäuse 26 eingeschlossen ist, an dessen Deckel 18 die Schaltfeder 14 befestigt ist.

Eine abgeänderte Ausführungsform der Erfindung ist in Fig. 3 in ihrer Verwendung mit dem gleichen Fahrradpedal 24 dargestellt. Bei dieser Ausführungsform ist der Deckel 19 starr mit dem Gehäuse 26 verbunden und trägt in seiner Mitte einen elastischen Teil 28, der sich bei Energieeinwirkung von oben durchbiegt. Die Schaltfeder 14 weist einen parallel zum Deckel 19 abgewinkelten Teil 30 auf, der an seinem dem freien Federteil gegenüberliegenden Ende 32 starr mit dem Gehäuse 26 verbunden ist. Ein am elastischen Teil 28 des Deckels 19 befestigtes Übertragungsglied 34 überträgt die durch die Energieeinwirkung bedingte Verformung des elastischen Teils 28 auf den abgewinkelten Teil 30 der Schaltfeder 14 gegen die Federkraft der Tellerfeder 22.

Der Vorteil der beschriebenen Ausführungsformen der Vorrichtung gemäß der Erfindung liegt im wesentlichen darin, daß sämtliche Bestandteile mit einfachen Mitteln in billiger Massenfertigung herstellbar sind, soweit sie nicht aus ebenfalls einfachen Norm-Kaufteilen bestehen.

## Patentansprüche

1. Vorrichtung zum Messen eines Energieaufwands an einem Betätigungsglied, das an einem Stellglied in Form einer Feder anliegt, deren jeweilige Auslenkwege durch ein Übertragungsglied auf eine mechanische Zähleinrichtung übertragen, von dieser aufaddiert und in Energieeinheiten angezeigt werden, dadurch gekennzeichnet, daß das Stellglied eine durch das Betätigungsglied (18, 28, 34) beaufschlagte Tellerfeder (22) ist, daß das Übertragungsglied aus einem Reiborgan (14) besteht, das mit einem die mechanische Zähleinrichtung (10) antreibenden Reibrad (12) zusammenwirkt, und daß zur Unterdrückung einer Rückwärtsdrehung des Reibrads (12) beim Aufhören der Energieeinwirkung eine ebenfalls mit einem Reibrad (12) zusammenwirkende Sperrfeder (16) vorgesehen ist.

2. Vorrichtung nach Anspruch 1, dadurch gekennzeichnet, daß der Umfang des Reibrads (12) mit einer in Axialrichtung verlaufenden Riffelung versehen und das Reiborgan eine mit einem gezinkten Abschlußrand versehene Schaltfeder (14) ist, wobei der gezinkte Abschlußrand dergestalt ausgerichtet ist, daß die Mitnehmerwirkung auf das Reibrad (12) in Betätigungsrichtung stärker ist als in Rückzugsrichtung.

3. Vorrichtung nach Anspruch 2, dadurch gekennzeichnet, daß die Sperrfeder (16) in gleicher Weise ausgebildet ist wie die Schaltfeder (14), wobei jedoch die Ausrichtung der Sperrfeder (16) derart gewählt ist, daß deren Bremswirkung in Rückzugsrichtung der Schaltfeder (14) größer ist als in der Betätigungsrichtung.

4. Vorrichtung nach Anspruch 2 oder 3, dadurch gekennzeichnet, daß die Schaltfeder (14) unmittelbar mit dem Betätigungsglied verbunden ist, wobei das Betätigungsglied durch eine Platte (18) gebildet ist, deren der Befestigungsseite der Schaltfeder entgegengesetztes Ende in Betätigungsrichtung der Schaltfeder (14) schwenkbar gelagert ist.

5. Vorrichtung nach Anspruch 2 oder 3, dadurch gekennzeichnet, daß die Schaltfeder (14) mit einem abgewinkelten Teil (30) parallel zum Betätigungsglied verläuft und am Ende des abgewinkelten Teils (30) schwenkbar gelagert ist, wobei das eigentliche Betätigungsglied (19) starr befestigt ist und einen elastischen Mittelteil (28) aufweist, der aufgrund einer Energieeinwirkung den abgewinkelten Teil (30) der Schaltfeder (14) beaufschlagt und gegen die Kraft der Tellerfeder (22) in Betätigungsrichtung drückt.

## Claims

1. A device for measuring an expenditure of energy on an operating member, which is adjacent to an actuator in the form of a spring, the extent of deflection of which at a given time is transmitted by a transmitting member to a mechanical counting device, is added up by the latter and is shown in energy units, characterized in that the actuator is a cup spring (22) which is acted upon by the operating member (18, 28, 34), in that the transmitting member consists of a friction element (14) which cooperates with a friction wheel (12) which drives the mechanical counting device (10), and that in order to suppress a backwards rotation of the friction wheel (12) when the energy input is terminated, a cooperating retaining spring (16) is provided.

2. A device according to Claim 1, characterized in that the periphery of the friction wheel (12) is provided with an axially orientated fluting and in that the friction element is a switch spring (14) provided with a pronged end edge, whereby the pronged end edge is orientated in such a way that the driving action on the friction wheel (12) is stronger in the actuating direction than in the return direction.

3. A device according to Claim 2, characterized in that the retaining spring (16) has the same form as the switch spring (14), whereby, however, the orientation of the retaining spring (16) is chosen such that its braking action in the return direction of the switch spring (14) is greater than in the actuation direction.

4. A device according to Claim 2 or Claim 3, characterized in that the switch spring (14) is directly connected to the operating member, whereby the operating member (18) is comprised of a plate (18) of which the end opposite to that to which the switch spring is attached is fixed to pivot in the actuating direction of the switch spring (14).

5. A device according to Claim 2 or Claim 3, characterized in that an angled part (30) of the switch spring (14) runs parallel to the operating member and the switch spring (14) is pivotably fastened at the end of the angled part (30), whereby the operating member (19) itself is rigidly fastened and comprises an elastic middle portion (28) which, as a result of an energy input, acts upon the angled part (30) of the switch spring (14) and presses in the actuating direction against the force of the cup spring (22).

**Revendications**

1. Dispositif pour mesurer une dépense d'énergie sur un organe d'actionnement, appliqué contre un organe de réglage revêtant la forme d'un ressort dont les courses respectives d'excursion sont répercutées, par l'intermédiaire d'un organe de transmission, sur un dispositif mécanique de comptage, sont additionnées par ce dernier et sont affichées en des unités d'énergie, caractérisé par le fait que l'organe de réglage est une rondelle élastique (22) soumise à l'action de l'organe d'actionnement (18, 28, 34); par le fait que l'organe de transmission consiste en un organe de friction (14) qui coopère avec une roue à friction (12), entrainant le dispositif mécanique de comptage (10); et par le fait qu'un ressort de blocage (16), coopérant également avec une roue à friction (12), est prévu pour interdire une rotation rétrograde de cette roue à friction (12) lorsque l'effet exercé par l'énergie cesse.

2. Dispositif selon la revendication 1, caractérisé par le fait que le pourtour de la roue à friction (12) est pourvu d'une cannelure s'étendant dans le sens axial, et l'organe de friction est un ressort sélecteur (14) qui est muni d'un bord extrême à fourchons, ce bord extrême à fourchons étant orienté de telle sorte que l'effet d'entraînement, exercé sur la roue à friction (12), soit plus intense dans la direction d'actionnement que dans la direction de rappel.

3. Dispositif selon la revendication 2, caractérisé par le fait que le ressort de blocage (16) est de même réalisation que le ressort sélecteur (14), l'orientation du ressort de blocage (16) étant toutefois choisie de manière que son effet de freinage soit plus grand, dans la direction de rappel du ressort sélecteur (14), que dans la direction d'actionnement.

4. Dispositif selon la revendication 2 ou 3, caractérisé par le fait que le ressort sélecteur (14) est directement relié à l'organe d'actionnement, cet organe d'actionnement étant formé par une plaque (18) dont l'extrémité, opposée au côté fixation du ressort sélecteur, est montée pivotante dans la direction d'actionnement de ce ressort sélecteur (14).

5. Dispositif selon la revendication 2 ou 3, caractérisé par le fait que le ressort sélecteur (14) s'étend, par une partie coudée (30), parallèlement à l'organe d'actionnement et est monté pivotant à l'extrémité de la partie coudée (30), l'organe d'actionnement (19) proprement dit étant fixé rigidement, et présentant une partie centrale élastique (28) qui, sous l'effet d'une énergie, agit sur la partie coudée (30) du ressort sélecteur (14) et la pousse dans la direction d'actionnement, en s'opposant à la force de la rondelle élastique (22).

Fig. 1

Fig. 2

Fig. 3